# EUROPEAN PATENT APPLICATION

(11) **EP 4 782 991 A1**
(43) Date of publication of application: **29.07.2026**
(21) Application number: 25154537.2
(22) Date of filing: 28.01.2025
(51) Int. Cl.: G06F 8/65

(54) **COMPUTER-IMPLEMENTED METHOD OF UPDATING RADIO FIRMWARE OF A ROBOTIC CONTAINER-HANDLING VEHICLE**

(71) Applicant: AutoStore Technology AS, 5578 Nedre Vats (NO)
(72) Inventor: MAZUR, Milosz, 5578 Nedre Vats (NO); OLSEN, Thomas, 5578 Nedre Vats (NO); STOPLE, Eirik, 5578 Nedre Vats (NO)
(74) Representative: Kilburn & Strode LLP

(57) **Abstract**

The disclosure relates to a computer-implemented method of updating radio firmware of a radio of a robotic container-handling vehicle in an automated storage and retrieval system, the method comprising: determining whether a bootloader of the radio is capable of updating the radio firmware to an updated radio firmware version; responsive to determining that the bootloader is not capable of updating the radio firmware to the updated radio firmware version, uploading bootloader update firmware to the robotic container-handling vehicle; and responsive to determining that the bootloader has been updated with the bootloader update firmware, uploading the updated radio firmware version to the robotic container-handling vehicle.

## Description

### TECHNICAL FIELD

The disclosure relates to a computer-implemented method of updating radio firmware of a radio of a robotic container-handling vehicle. More particularly, it relates to computer-implemented method of updating radio firmware of a radio of a robotic container-handling vehicle in an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

In order to transport containers from the grid and to deliver them to ports of stations at the periphery of the grid, the robotic container-handling vehicles in the automated storage and retrieval system receive commands from a processing system via a radio link. Therefore, the robotic container-handling vehicles include radios in order to receive commands from the processing system. The functionality of the radios is enabled by radio firmware.

In order to add new radio functionality, such as new communications features or security updates, it is necessary to update the radio firmware. When updating the radio firmware of a robotic container-handling vehicle, there is a risk that the container-handling vehicle may become stranded on the rail system and require retrieval, or that the container-handling vehicle may be left in an inoperative state in which it cannot execute commands. This reduces the time that the container-handling vehicles are operational on the grid, and therefore reduces the efficiency of retrieving containers from the grid.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a system for updating radio firmware of a robotic container-handling vehicle;
Fig. 6 shows a flowchart of a method that may be carried out by a user device of the system shown in Fig. 5, in order to update radio firmware of a robotic container-handling vehicle;
Fig. 7 shows a flowchart of a further method that may be carried out by the user device of the system shown in Fig. 5, and that includes an example implementation of part of the method shown in Fig. 6;
Fig. 8 shows a flowchart of a method that may be carried out by the user device of the system shown in Fig. 5 after carrying out part of the method shown in Fig. 6;
Fig. 9 shows a flowchart of a further method that may be carried out by the user device of the system shown in Fig. 5 after carrying out another part of the method shown in Fig. 6.

### DETAILED DESCRIPTION

In overview, the disclosure relates to a method of updating the radio firmware of a robot, in which a determination is made as to whether the radio bootloader is capable of updating the radio firmware to an updated radio firmware version. For example, an updated radio firmware version may be too large to be handled by the radio bootloader. In this case, an update to the radio bootloader is required before the radio firmware can be updated. Therefore, if it is determined that the radio bootloader is not capable of updating the radio firmware to the updated radio firmware version (e.g., because the updated radio firmware version is too large to be handled by the radio bootloader), bootloader update firmware is uploaded to the robot so that the bootloader can be updated.

Robot downtime in the automated storage and retrieval system is reduced by the features of determining whether the radio bootloader is capable of updating the radio firmware to the updated radio firmware version and uploading bootloader update firmware to the robot if the radio bootloader is not capable of updating the radio firmware to the updated radio firmware version. If the updated radio firmware version were instead simply uploaded to the robot, then it is highly likely that the robot would be left in a non-functioning state, in which the robot is unable to move or communicate via its radio. In this case, the robot would need to be manually retrieved from the grid, which may require interrupting operations of other robots moving on the grid, thereby increasing system downtime. The process of checking whether the radio bootloader is capable of updating the radio firmware to the updated radio firmware version and updating the radio bootloader if it is not capable of updating the radio firmware reduces the likelihood of the robot being left in a non-functioning state, thereby reducing robot downtime in the automated storage and retrieval system.

In view of the potential for robots to be left in a non-functioning state, a user may choose to apply radio firmware updates after moving robots close to a service area of the automated storage and retrieval system. This would allow a robot to be more easily retrieved from the grid in the event that the robot enters a non-functioning state, but reduces the extent of the grid over which the robot is operational, thereby limiting operational performance of the automated storage and retrieval system.

Once the bootloader has been updated using the bootloader update firmware, the robot is in an inoperative state, in which it can communicate via its radio, but cannot move. The robot remains in the inoperative state until the radio firmware is updated. If a user were to update the radio bootloader prior to updating the radio firmware, they would need to remember to update the radio firmware once the radio bootloader has been updated. This is challenging to keep track of for larger fleets of robots. Accordingly, in such cases, there is a risk that attempts to update the radio firmware of a robot may leave the robot in an inoperative state, thereby increasing system downtime.

### Automated storage and retrieval system overview

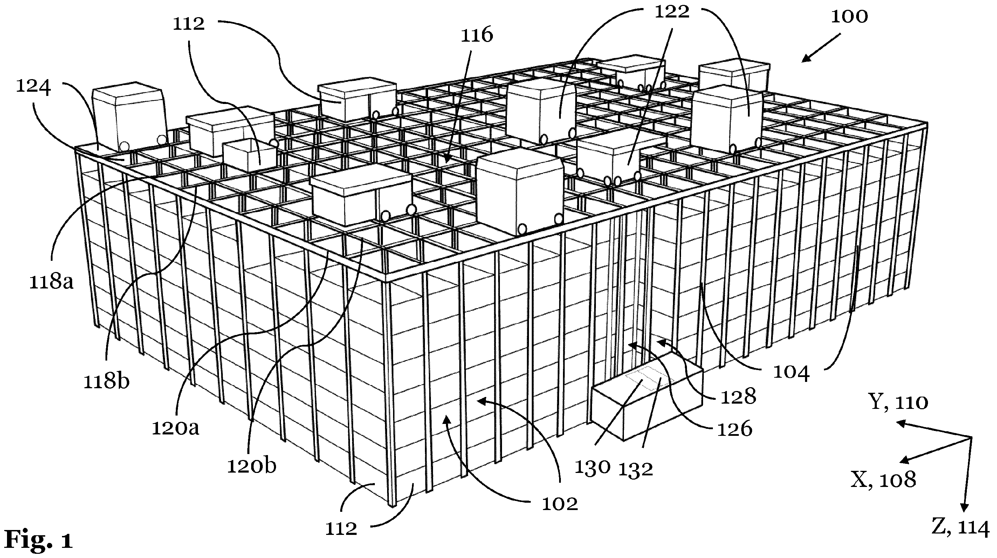

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

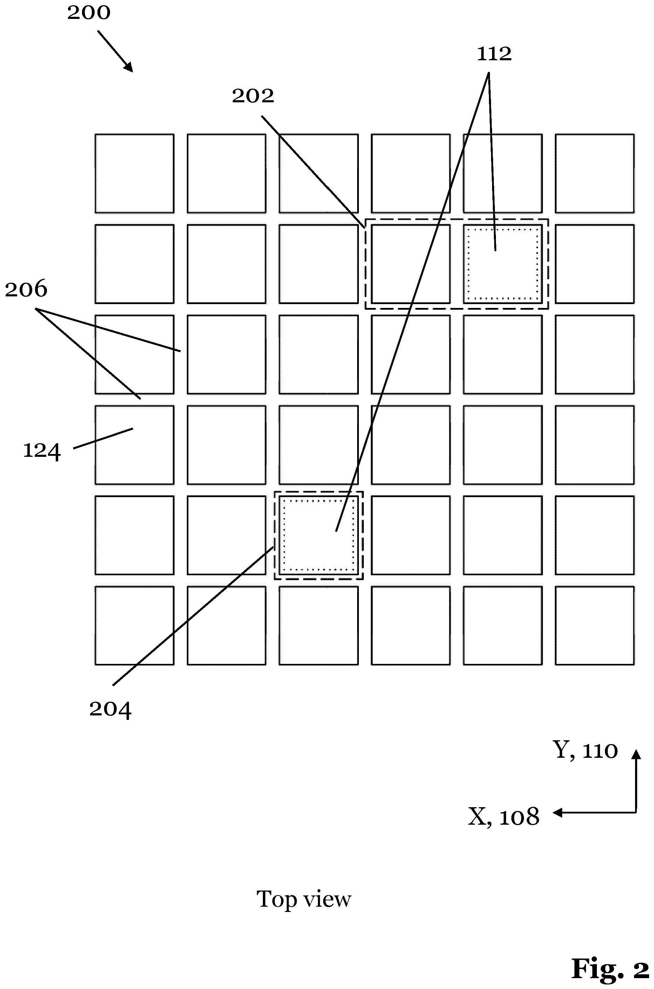

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

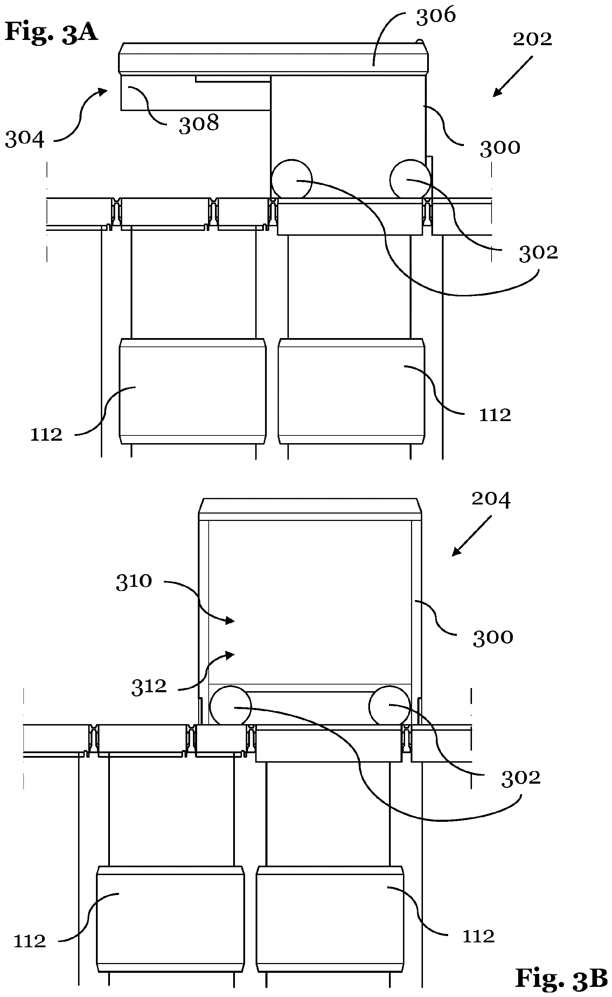

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

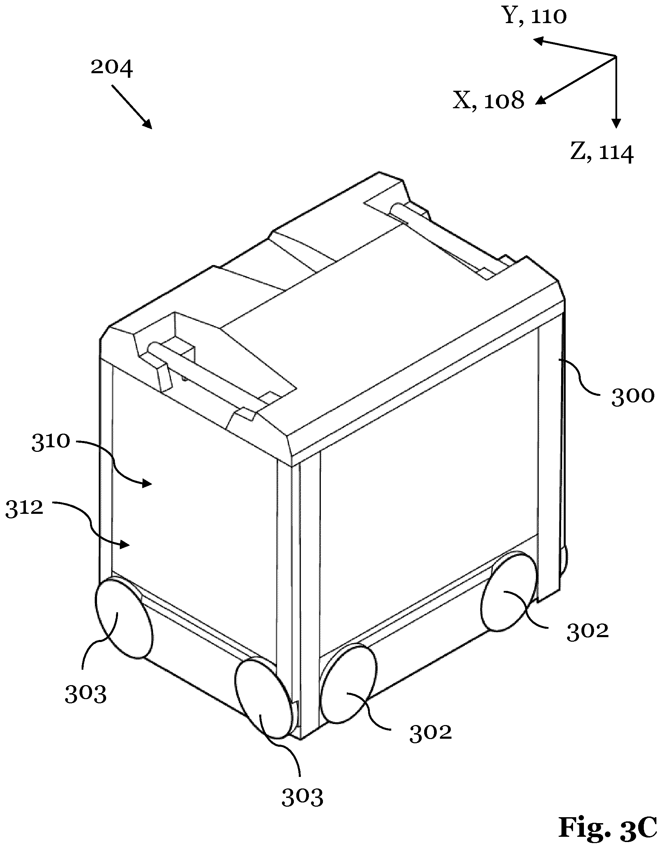

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

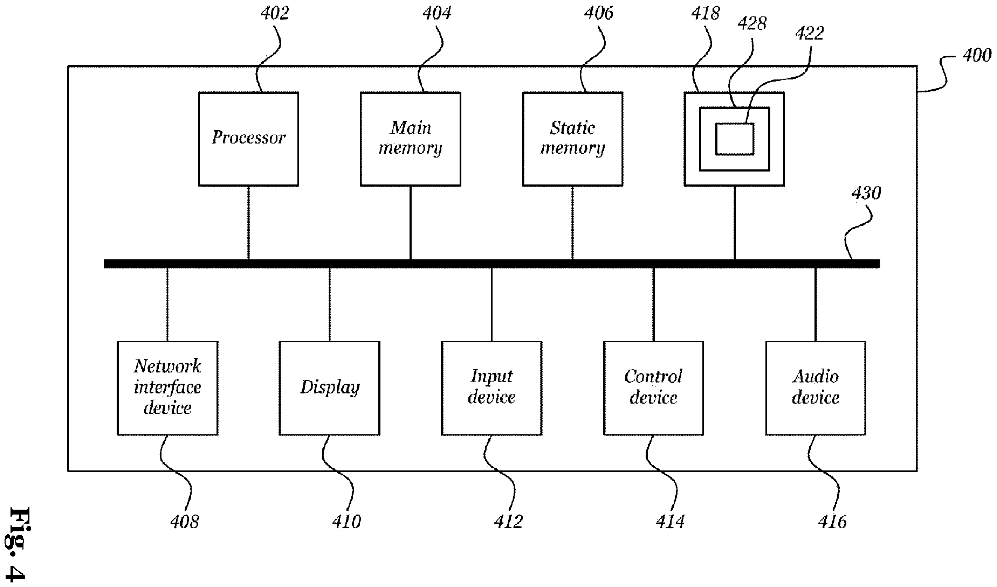

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### System overview

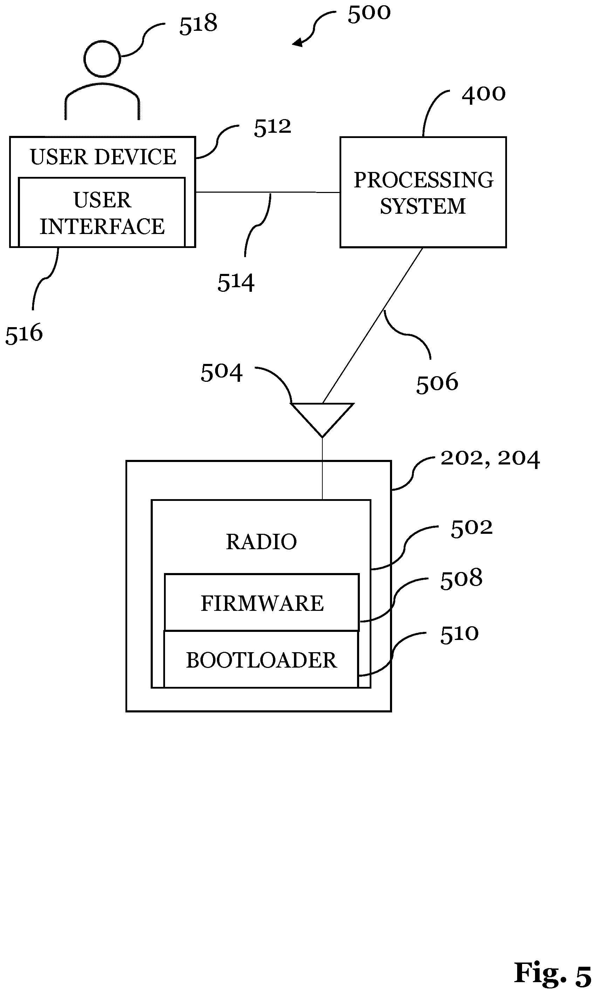

Fig. 5 shows an overview of components of a system 500 used to update the firmware of a radio of a robot 202, 204. As explained above, the robot 202, 204 receives commands from the processing system 400. As shown in Fig. 5, the robot 202, 204 includes a radio 502 (comprising an antenna 504), which allows the robot 202, 204 to communicate with the processing system 400 via a radio link 506. The functionality of the radio 502 is enabled by firmware 508 of the radio 502, which may be stored in non-volatile memory. The radio 502 also includes a bootloader 510, which can be used for handling updates to the firmware 508, such as new communications features and security updates.

As shown in Fig. 5, a user device 512 communicates with the processing system 400 via a communications link 514 (for example, via a wired or wireless link). The user device 512 presents a user interface 516 to a user 518. In one example, the user interface 516 is configured to display a firmware update wizard. The firmware update wizard allows the user to initiate an update to the firmware 508 of the radio 502, and updates the user 518 on the progress of the update to the firmware 508. The user device 512 may include the components of the processing system 400 shown in Fig. 4 and described above. In order for the firmware 508 of the radio 502 to be updated, the user device 512 is configured to carry out the methods 600, 700, 800, 900 described below.

As mentioned above, communication with the robot 202, 204 is carried out using the radio link 506 between the robot 202, 204 and the processing system 400. Accordingly, when using the user device 512 to update the firmware 508 of the robot 202, 204, commands from the user device 512 are routed to the robot 202, 204 via the communications link 514 between the user device 512 and the processing system 400 and the radio link 506 between the processing system 400 and the robot 202, 204. Likewise, information provided by the robot 202, 204 is passed to the user device 512 via the radio link 506 between the robot 202, 204 and the processing system 400, and the communications link 514 between the processing system 400 and the user device 512.

### Firmware update method

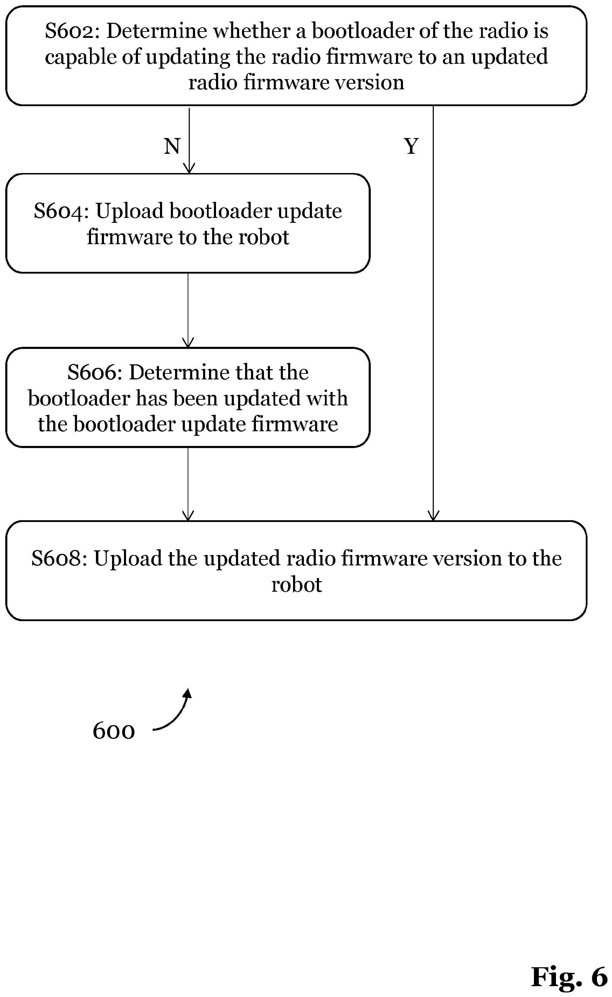

Fig. 6 is a flowchart of a method 600 of updating the firmware 508 of the radio 502 of a robot 202, 204. The method 600 may be implemented by the user device 512 shown in Fig.5, which communicates with the robot 202, 204 via the processing system 400, as described above.

At S602, the user device 512 determines whether the bootloader 510 of the radio 502 is capable of updating the firmware 508 of the radio 502 to an updated radio firmware version. One example in which the bootloader 510 of the radio 502 may not be capable of updating the firmware 508 of the radio 502 to an updated radio firmware version is if the updated radio firmware version is too large for the bootloader 510 to handle. On the other hand, the bootloader 510 of the radio 502 may be capable of updating the firmware 508 of the radio 502 to the updated radio firmware version if the updated radio firmware version is not too large for the bootloader 510 to handle. For example, the bootloader 510 may already have been updated so that it is capable of handling a large updated radio firmware version.

If the user device 512 determines, at S602, that the bootloader 510 of the radio 502 is not capable of updating the firmware 508 of the radio 502 to the updated radio firmware version, the method 500 proceeds to S604. On the other hand, if the user device 512 determines, at S602, that the bootloader 510 is capable of updating the firmware 508 of the radio 502 to the updated radio firmware version, the method 600 proceeds to S608.

At S604, the user device 512 uploads bootloader update firmware to the robot 202, 204. The bootloader update firmware may be uploaded to the robot 202, 204 over the radio link 506. For example, chunks of the bootloader update firmware may be included in radio messages sent from the processing system 400 to the robot 202, 204, where throughput allows.

The bootloader update firmware uploaded to the robot 202, 204 at S604 is used to update the bootloader 510 of the radio 502 by reprogramming the bootloader 510 to a new version. In one example, the bootloader update firmware used to update the bootloader 510 of the radio 502 replaces the firmware 508 of the radio 502 in non-volatile memory. For example, in order to reprogram the bootloader 510 to a new version, firmware 508 with version identifier "v1" may be replaced with bootloader update firmware with version identifier "v100".

Once the upload of the bootloader update firmware to the robot 202, 204 has been completed at S604, the user device 512 proceeds to carry out S608 in response to determining, at S606, that the bootloader 510 of the radio 502 has been updated with the bootloader update firmware. Continuing the above example, the bootloader update firmware with version identifier "v100" may be used for reprogramming the bootloader 510 of the radio 502 from a version identifier "v1" to a version identifier "v2". In one example, after initiating S604, the user device 512 may carry out method 800 described below in order to determine, at S606, whether the bootloader 510 has been updated with the bootloader update firmware.

In one example, the bootloader update firmware is uploaded to the robot 202, 204 at S604 while the robot 202, 204 is operational on the grid 100. For example, the robot 202, 204 may continue to carry out commands in accordance with instructions received from the processing system 400, while chunks of the bootloader update firmware are transmitted to the robot 202, 204 over the radio link 506. In this way, downtime of the robot 202, 204 is reduced, when compared with a scenario in which the robot 202, 204 is removed from the grid 100 or confined to a particular area of the grid 100 for carrying out an update to the firmware 508 of the radio 502.

At S608, the user device 512 uploads the updated radio firmware version to the robot 202, 204. As with the bootloader update firmware, the updated radio firmware version may be uploaded to the robot 202, 204 over the radio link 506. For example, chunks of the updated radio firmware version may be included in radio messages sent from the processing system 400 to the robot 202, 204, where throughput allows. Once the upload of the updated radio firmware version to the robot 202, 204 has been initiated at S608, the user device 512 may proceed to carry out the method 900 described below.

The updated radio firmware version replaces the firmware stored in non-volatile memory. Therefore, if the method 600 proceeds directly from S602 to S608, the firmware 508 of the radio 502 is replaced in non-volatile memory by the updated radio firmware version uploaded at S608. Otherwise, if the method 600 proceeds from S606 to S608, the bootloader update firmware uploaded at S604 is replaced in non-volatile memory with the updated radio firmware version uploaded at S608. Continuing the above example, in the case where the method proceeds from S604 to S606 and on to S608, once the bootloader 510 of the radio 502 has been updated from version "v1" to version "v2" (as determined at S606), the bootloader update firmware with version identifier "v100" may be replaced in non-volatile memory with the updated radio firmware version with version identifier "v2". At this point, the firmware 508 with version identifier "v1" can be updated to the updated radio firmware version with version identifier "v2".

In the case where the method 600 proceeds directly from S602 to S608 (i.e., no update to the bootloader 510 of the radio 502 is required), the updated radio firmware version is uploaded to the robot 202, 204 at S608 while the robot 202, 204 is operational on the grid 100. For example, the robot 202, 204 may continue to carry out commands in accordance with instructions received from the processing system 400, while chunks of the updated radio firmware version are transmitted to the robot 202, 204 over the radio link 506. In this way, downtime of the robot 202, 204 is reduced, when compared with a scenario in which the robot 202, 204 is removed from the grid 100 or confined to a particular area of the grid 100 for carrying out an update to the firmware 508 of the radio 502.

### Determining capability of bootloader to handle firmware update

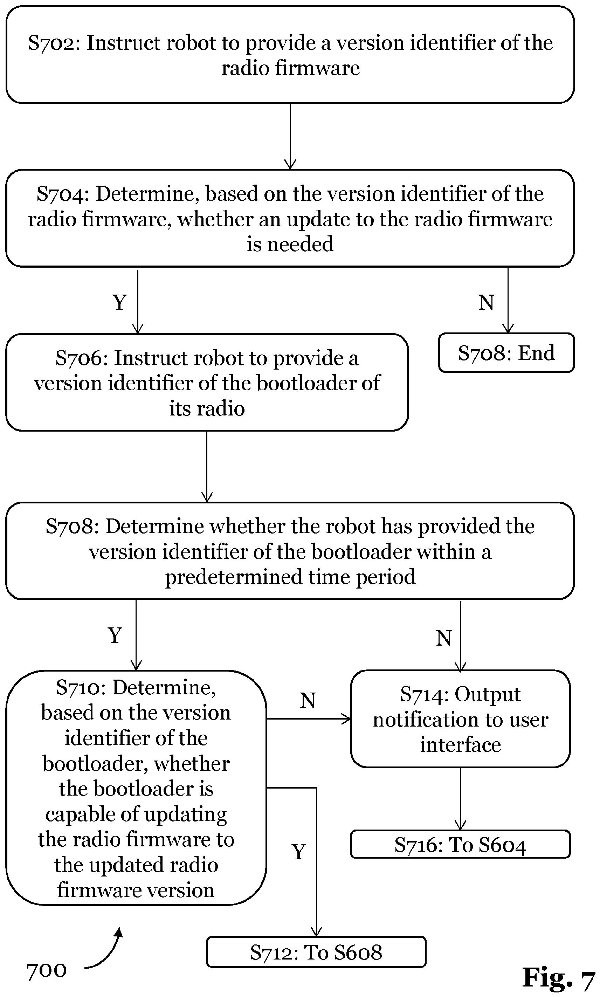

Fig. 7 is a flowchart of a further method 700 that may be carried out by the user device 512. Specifically, S702 and S704 may be carried out by the user device 512 prior to the user device carrying out S602 of the method 600. S706 to S716 describe processes that may be carried out by the user device 512 in determining, at S602 of the method 600, whether the bootloader 510 is capable of updating the firmware 508 of the radio 502 to the updated radio firmware version.

At S702, the user device 512 instructs the robot 202, 204 to provide a version identifier of the firmware 508 of its radio 502. For example, the user device 512 may provide a command to the processing system 400 to instruct the robot 202, 204 to provide a response identifying the version identifier of the firmware 508 of its radio 502. Once the response is received at the processing system 400, it may be sent to the user device 512 via the communications link 514.

At S704, the user device 512 determines, based on the version identifier provided by the robot 202, 204 at S702, whether an update to the firmware 508 of the radio 502 is needed. For example, if the version identifier provided by the robot 202, 204 (e.g., "v2") matches an identifier of the updated radio firmware version (e.g., "v2"), then no update to the firmware 508 is needed, because the radio 502 already has the latest version (i.e., "v2") of the firmware 508. On the other hand, if the version identifier provided by the robot 202, 204 (e.g., "v1") does not match the identifier of the updated radio firmware version (e.g., "v2"), then an update to the firmware 508 is needed, because the radio 502 does not have the latest version (i.e., "v2") of the firmware 508.

If the user device 512 determines at S704 that an update to the firmware 508 is needed, the method proceeds to S706. Otherwise, if the user device 512 determines at S704 that an update to the firmware 508 is not needed, the method proceeds to S708, at which the method 700 ends. If the method 700 proceeds to S708, then the user device 512 does not need to carry out the method 600.

At S706, the user device 512 instructs the robot 202, 204 to provide a version identifier of the bootloader 510 of its radio 502. For example, the user device 512 may provide a command to the processing system 400 to instruct the robot 202, 204 to provide a response identifying the version identifier of the bootloader 510 of its radio 502. Once the response is received at the processing system 400, it may be sent to the user device 512 via the communications link 514.

The user device 512 may instruct the robot 202, 204 to provide the version identifier of the bootloader 510 of its radio 502 at the same time as instructing the robot 202, 204 to provide the version identifier of the firmware 508 of its radio 502. In other words, the user device 512 may provide a single command to the processing system 400 to instruct the robot 202, 204 to provide a response identifying both the version identifier of the firmware 508 of its radio 502 and the version identifier of the bootloader 510 of its radio 502.

At S708, the user device 512 determines whether the robot 202, 204 has provided the version identifier of the bootloader 510 of its radio 502 within a predetermined time period. For example, the user device 512 may determine whether the robot 202, 204 has provided the version identifier of the bootloader 510 of its radio 502 within a timeout period of ten seconds. If the user device 512 determines at S708 that the robot 202, 204 has provided the version identifier of the bootloader 510 of its radio 502 within the predetermined time period, the method 700 proceeds to S710. On the other hand, if the user device 512 determines at S708 that the robot 202, 204 has not provided the version identifier of the bootloader 510 within the predetermined time period, the method proceeds to S714.

The predetermined time period provides a safety mechanism by which the bootloader 510 of the radio 502 of the robot 202, 204 is not assumed to be capable of updating the firmware 508 of the radio 502 to the updated radio firmware version in the event that the robot 202, 204 does not identify the version identifier of the bootloader 510 of its radio 502. Otherwise, if the bootloader 510 of the radio 502 were assumed to be capable of updating the firmware 508 of the radio 502 to the updated radio firmware version in the event that the robot 202, 204 did not identify the version identifier of the bootloader 510, then the robot 202, 204 may be left in a non-functioning state if the bootloader 510 attempts to update the firmware 508 of the radio 502 to the updated radio firmware version but is not capable of doing so.

At S710, the user device 512 determines, based on the version identifier of the bootloader 510 received at S708, whether the bootloader 510 of the radio 502 is capable of updating the firmware 508 of the radio 502 to the updated radio firmware version. The determination made by the user device 512 at S710 may additionally be based on the version identifier of the updated radio firmware version. For example, a bootloader 510 of the radio 502 with a version identifier "v1" may be capable of updating the firmware 508 of the radio 502 to an updated radio firmware version with version identifier "v2", but may be incapable of updating the firmware 508 of the radio 502 to an updated radio firmware version with version identifier "v3". On the other hand, a bootloader 510 of the radio 502 with a version identifier "v2" may be capable of updating the firmware 508 of the radio 502 to the updated radio firmware version with version identifier "v3".

The user device 512 may make the determination at S710 based on a threshold version identifier of the bootloader 510 of the radio 502. For example, the user device 512 may determine that a version identifier of the bootloader 510 that is greater than or equal to a threshold version identifier (e.g., "v2") is capable of updating the firmware 508 of the radio 502 to an updated radio firmware version with version identifier "v2". On the other hand, the user device 512 may determine that a version identifier of the bootloader 510 that is less than the threshold version identifier (e.g., a bootloader 510 with version identifier "v1") is not capable of updating the firmware 508 of the radio 502 to the updated radio firmware version with version identifier "v2".

If the user device 512 determines at S710 that the bootloader 510 of the radio 502 is capable of updating the firmware 508 of the radio 502 to the updated radio firmware version, the method 700 proceeds to S712. On the other hand, if the user device 512 determines at S710 that the bootloader 510 is not capable of updating the firmware 508 of the radio 502 to the updated radio firmware version, the method 700 proceeds to S714.

At S712, the user device 512 proceeds with carrying out S608 of the method 600. Prior to carrying out S608 of the method 600, the user device 512 may output a notification to the user 518 via the user interface 516. The notification presented on the user interface 516 may inform the user 518 that the firmware 508 of the radio 502 of a particular robot 202, 204 has been identified as requiring an update to the updated radio firmware version. The notification presented on the user interface 516 may provide the user 518 with an option to approve the update to the firmware 508 of the radio 502, or to cancel the update to the firmware 508 of the radio 502.

At S714, a notification is output to the user 518 via the user interface 516. The notification presented on the user interface 516 may inform the user 518 that both the firmware 508 of the radio 502 of a particular robot 202, 204 and the bootloader 510 of the radio 502 of that robot 202, 204 have been identified as requiring an update. Specifically, the notification may inform the user 518 that the firmware 508 requires updating to the updated radio firmware version, and that the bootloader 510 requires updating to an updated bootloader version. Outputting a notification to inform the user 518 of the need to update the bootloader 510 is beneficial because it allows the user 518 to appreciate why an update to the firmware 508 of a robot 502 may take longer than anticipated. If no notification were output, the user 518 may assume that the update to the firmware 508 has failed, and may abort the process of updating the firmware 508, potentially leaving the robot 202, 204 in a non-functioning state.

The notification presented on the user interface 516 at S714 may provide the user 518 with an option to approve the update to both the firmware 508 and the bootloader 510 of the radio 502, or to cancel the update to both the firmware 508 and the bootloader 510. In this way, once the user 518 approves the update to both the firmware 508 and the bootloader 510 of the radio 502, the bootloader 510 and the firmware 508 are updated automatically (i.e., without requiring user input). Therefore, the user 518 is not required to remember to update the firmware 508 of the radio 502 to the updated radio firmware version once the bootloader 510 of the radio 502 has been updated using the bootloader update firmware.

After the user device 512 has presented the notification on the user interface 516 at S714, the method 700 proceeds to S716. For example, if the notification presented at S714 provides the user with options to approve or cancel the updates to both the firmware 508 and the bootloader 510 of the radio 502, the method 700 may proceed to S716 if the user approves the updates. At S716, the user device 512 proceeds with carrying out S604 of the method 600.

### Determining successful bootloader update

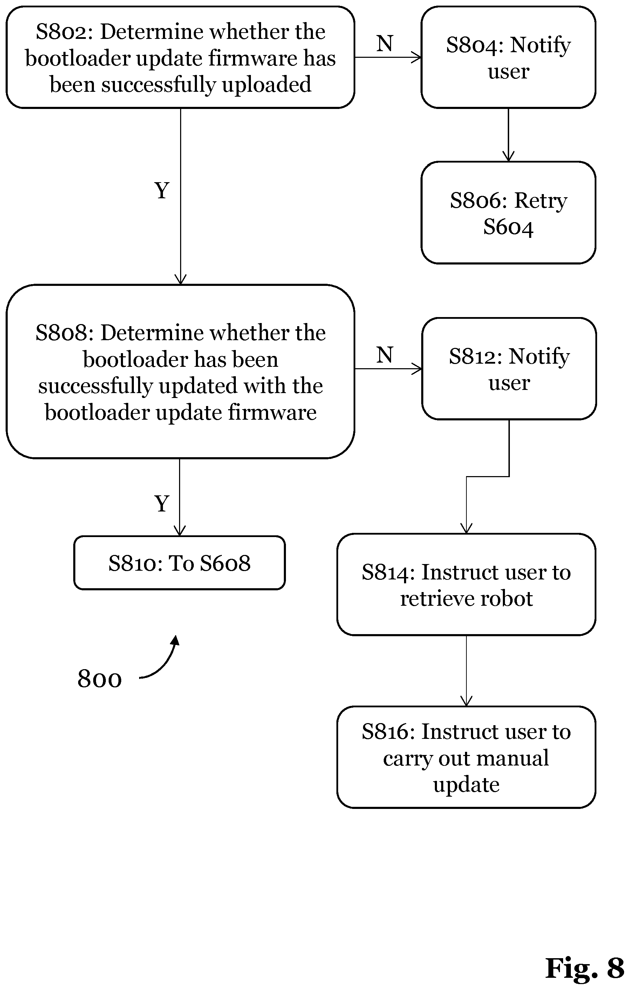

Fig. 8 is a flowchart of another method 800 that may be carried out by the user device 512. Specifically, as explained above, the method 800 may be carried out by the user device 512 once the user device 512 has initiated S604 of the method 600, and may allow the user device 512 to carry out the determination at S606 of the method 600. The method 800 assists the user 518 in taking appropriate action in the event that the bootloader 510 of the radio 502 is not successfully uploaded and/or not successfully updated.

At S802, the user device 512 determines whether the bootloader update firmware has been successfully uploaded to the robot 202, 204. As discussed above, chunks of the bootloader update firmware may be included in radio messages sent from the processing system 400 to the robot 202, 204. Each chunk may identify how much of the bootloader update firmware it contains, in order to allow the robot 202, 204 and/or the processing system 400 to determine when all chunks have been transmitted to and/or received by the robot 202, 204 over the radio link 506. For example, a header of the chunk may identify how much of the bootloader update firmware is contained in that chunk.

The processing system 400 and/or the robot 202, 204 may determine whether the bootloader update firmware has been successfully uploaded to the robot 202, 204. For example, the processing system 400 and/or the robot 202, 204 may determine whether all chunks of the bootloader update firmware have been successfully transmitted to the robot 202, 204 over the radio link 506. Once all chunks of the bootloader update firmware have been successfully uploaded to the robot 202, 204, the processing system 400 and/or the robot 202, 204 may notify the user device 512 that the bootloader update firmware has been successfully uploaded to the robot 202, 204. Therefore, the user device 512 may determine that the bootloader update firmware has been successfully uploaded to the robot 202, 204 once it has been notified by the processing system 400 and/or the robot 202, 204. The user device 512 may also output a notification to the user interface 516 to inform the user 518 that the bootloader update firmware has been successfully uploaded to the robot 202, 204.

In one example, the processing system 400 and/or the robot 202, 204 may determine whether each chunk of the bootloader update firmware has been successfully uploaded to the robot 202, 204. In response to determining that a particular chunk of the bootloader update firmware has been successfully uploaded to the robot 202, 204, the processing system 400 and/or the robot 202, 204 may notify the user device 512 that the particular chunk of the bootloader update firmware has been successfully uploaded to the robot 202, 204. The user device 512 may output a notification to the user interface 516 to update the user 518 on the progress of uploading the bootloader update firmware. For example, the user device 512 may output a progress bar to the user interface 516, where the progress bar is updated based on the number and/or the size of the chunks of the bootloader update firmware that have been uploaded to the robot 202, 204.

If the user device 512 determines at S802 that the bootloader update firmware has been successfully uploaded to the robot 202, 204, the method proceeds to S808. The method 800 may proceed to S808 after the user device 512 instructs the robot 202, 204 to proceed with updating the bootloader 510 of its radio 502 using the bootloader update firmware (i.e., to perform programming of the bootloader 510). For example, in response to being notified by the processing system 400 and/or the robot 202, 204 that the bootloader update firmware has been successfully uploaded to the robot 202, 204, the user device 512 may instruct the robot 202, 204 to update the bootloader 510 using the bootloader update firmware. The user device 512 may instruct the robot 202, 204 automatically (i.e., without requiring input from the user 518).

On the other hand, if the user device 512 determines that the bootloader update firmware has not been successfully uploaded to the robot 202, 204, the method proceeds to S804. At S804, the user 518 is notified that the bootloader update firmware has not been successfully uploaded to the robot 202, 204. For example, the user device 512 may display a notification on the user interface 516. The notification presented on the user interface 516 may provide the user 518 with an option to retry the upload of the bootloader update firmware.

From S804, the method 800 then proceeds to S806, at which the user device 512 retries S604 of the method 600. As explained above, the robot 202, 204 may be operational on the grid 100 during upload of the bootloader update firmware to the robot 202, 204. This means that although the bootloader update firmware has not been successfully uploaded to the robot 202, 204, the robot 202, 204 is still operational (i.e., it is not in a non-functioning state). In the case where a notification output at S804 provides the user 518 with an option to retry the upload of the bootloader update firmware, the method 800 may proceed to S806 in response to the user 518 selecting the option to retry the upload of the bootloader update firmware. After the retry of S604 has been initiated, the user device 512 may restart the method 800.

At S808, the user device 512 determines whether the bootloader 510 has been successfully updated with the bootloader update firmware. The radio 502 of the robot 202, 204 shuts down and reboots as part of the update process. In one example, during reboot of the radio 502, the robot 202, 204 automatically provides the version identifier of the firmware 508 of its radio 502 as part of the reboot process. After the robot 202, 204 has provided the version identifier of the firmware 508 of its radio 502, the user device 512 can instruct the robot 202, 204 to provide a version identifier of the bootloader 510 of its radio 502.

The user device 512 determines at S808 that the bootloader 510 of the radio 502 has been successfully updated with the bootloader update firmware if: (i) the firmware version of the radio 502 has been updated from the version identifier of the previous firmware (e.g., v1) to the version identifier of the bootloader update firmware (e.g., v100); and (ii) the version identifier of the bootloader 510 has been updated from the previous version identifier of the bootloader 510 (e.g., v1) to the version identifier of the bootloader 510 (e.g., v2) that is capable of handling the updated radio firmware version.

On the other hand, the user device 512 determines at S808 that the bootloader 510 has not been successfully updated if: (i) the wrong version identifier of the firmware 508 of the radio 502 is provided by the robot 202, 204 during rebooting of the radio 502 (i.e., a version identifier that does not match the version identifier of the bootloader update firmware); (ii) no version identifier of the firmware 508 of the radio 502 is provided by the robot 202, 204 during rebooting of the radio 502; (iii) the radio 502 does not reboot; (iv) the robot 202, 204 responds with the wrong version identifier of the bootloader 510 in response to the request from the user device 512 (i.e., a version identifier of the bootloader 510 that does not match the version identifier of the updated bootloader 510); or (v) the robot 202, 204 does not respond with a version identifier of the bootloader 510 in response to the request from the user device 512.

If the user device 512 determines at S808 that the bootloader 510 has been successfully updated with the bootloader update firmware, the method 800 proceeds to S810, at which the user device carries out S608 of the method 600. On the other hand, if the user device 512 determines at S808 that the bootloader 510 has not been successfully updated with the bootloader update firmware, the method 800 proceeds to S812, at which the user device 512 outputs a notification to the user 518 via the user interface 516.

If the bootloader update firmware has been successfully uploaded at S802 but the bootloader 510 has not been successfully updated at S808, the robot 202, 204 is likely to be in a non-functioning state. In this state, the radio 502 of the robot 202, 204 does not function, meaning that the robot 202, 204 requires retrieval from the grid 100. The notification output at S812 may inform the user 518 that the robot 202, 204 is in a non-functioning state.

The user device 512 may then provide instructions to the user 518 via the user interface 516. Specifically, the user device 512 may instruct, at S814, the user 518 to retrieve the robot 202, 204 from the grid 100. The user device 512 may then instruct, at S816, the user 518 to carry out a manual update to the bootloader 510 and firmware 508 of the radio 502 (e.g., using a wired data connection from the robot 202, 204 to a separate computing device).

### Determining successful firmware update

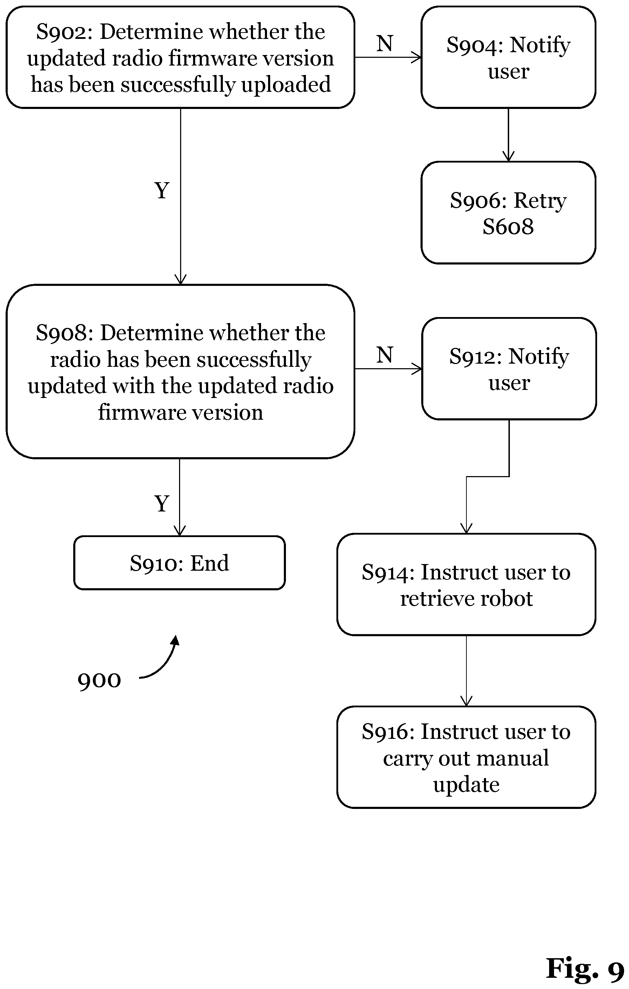

Fig. 9 is a flowchart of a further method 900 that may be carried out by the user device 512. Specifically, as explained above, the method 900 may be carried out by the user device 512 once the user device 512 has initiated S608 of the method 600. The method 900 assists the user 518 in taking appropriate action in the event that the firmware 508 of the radio 502 is not successfully uploaded and/or not successfully updated.

At S902, the user device 512 determines whether the updated radio firmware version has been successfully uploaded to the robot 202, 204. As discussed above, chunks of the updated radio firmware version may be included in radio messages sent from the processing system 400 to the robot 202, 204. Each chunk may identify how much of the updated radio firmware version it contains, in order to allow the robot 202, 204 and/or the processing system 400 to determine when all chunks have been transmitted to and/or received by the robot 202, 204 over the radio link 506. For example, a header of the chunk may identify how much of the updated radio firmware version is contained in that chunk.

The processing system 400 and/or the robot 202, 204 may determine whether the updated radio firmware version has been successfully uploaded to the robot 202, 204. For example, the processing system 400 and/or the robot 202, 204 may determine whether all chunks of the updated radio firmware version have been successfully transmitted to the robot 202, 204 over the radio link 506. Once all chunks of the updated radio firmware version have been successfully uploaded to the robot 202, 204, the processing system 400 and/or the robot 202, 204 may notify the user device 512 that the updated radio firmware version has been successfully uploaded to the robot 202, 204. Therefore, the user device 512 may determine that the updated radio firmware version has been successfully uploaded to the robot 202, 204 once it has been notified by the processing system 400 and/or the robot 202, 204. The user device 512 may also output a notification to the user interface 516 to inform the user 518 that the updated radio firmware version has been successfully uploaded to the robot 202, 204.

In one example, the processing system 400 and/or the robot 202, 204 may determine whether each chunk of the updated radio firmware version has been successfully uploaded to the robot 202, 204. In response to determining that a particular chunk of the updated radio firmware version has been successfully uploaded to the robot 202, 204, the processing system 400 and/or the robot 202, 204 may notify the user device 512 that the particular chunk of the updated radio firmware version has been successfully uploaded to the robot 202, 204. The user device 512 may output a notification to the user interface 516 to update the user 518 on the progress of uploading the updated radio firmware version. For example, the user device 512 may output a progress bar to the user interface 518, where the progress bar is updated based on the number and/or the size of the chunks of the updated radio firmware version that have been uploaded to the robot 202, 204.

If the user device 512 determines at S902 that the updated radio firmware version has been successfully uploaded to the robot 202, 204, the method proceeds to S908. The method 900 may proceed to S908 after the user device 512 instructs the robot 202, 204 to proceed with updating the firmware 508 of the radio 502 to the updated radio firmware version. For example, in response to being notified by the processing system 400 and/or the robot 202, 204 that the updated radio firmware version has been successfully uploaded to the robot 202, 204, the user device 512 may instruct the robot 202, 204 to update the firmware 508 to the updated radio firmware version. The user device 512 may instruct the robot 202, 204 automatically (i.e., without requiring input from the user 518).

On the other hand, if the user device 512 determines that the updated radio firmware version has not been successfully uploaded to the robot 202, 204, the method proceeds to S904. At S904, the user 518 is notified that the updated radio firmware version has not been successfully uploaded to the robot 202, 204. For example, the user device 512 may display a notification on the user interface 516. The notification presented on the user interface 516 may provide the user 518 with an option to retry the upload of the updated radio firmware version.

From S904, the method 900 then proceeds to Sg06, at which the user device 512 retries S608. If the method 600 proceeded directly from S602 to S608 (i.e., no update to the bootloader 510 was required), the robot 202, 204 may be operational on the grid 100 during upload of the updated radio firmware version to the robot 202, 204. In this case, although the updated radio firmware version has not been successfully uploaded to the robot 202, 204, the robot 202, 204 is still operational (i.e., it is not in a non-functioning state).

On the other hand, if the method proceeded from S604 to S608 (i.e., an update to the bootloader 510 was required), the robot 202, 204 is likely to be in an inoperative state. In this state, the robot 202, 204 can still receive messages via its radio 502, but it cannot carry out operational commands on the grid 100 (i.e., it cannot move). In this case, although the updated radio firmware version has not been successfully uploaded to the robot 202, 204, uploading of the updated radio firmware version can be re-attempted, because the radio 502 is still functioning.

In the case where a notification output at S904 provides the user 518 with an option to retry the upload of the updated radio firmware version, the method 900 may proceed to S906 in response to the user 518 selecting the option to retry the upload of the updated radio firmware version. After the retry of S608 has been initiated, the user device 512 may restart the method 900.

At S908, the user device 512 determines whether the radio 502 has been successfully updated with the updated radio firmware version (i.e., whether the firmware 508 has been updated to the updated radio firmware version). As explained above, the radio 502 of the robot 202, 204 shuts down and reboots as part of the update process, and automatically provides the version identifier of the firmware 508 of its radio 502 during rebooting.

The user device 512 determines at S908 that the firmware 508 has been successfully updated to the updated radio firmware version if the firmware version of the radio 502 has been updated from the version identifier of the previous firmware (e.g., v1, if the method 600 proceeded directly from S602 to S608, or v100, if the method 600 proceeded from S604 to S608) to the version identifier of the updated radio firmware version (e.g., v2).

On the other hand, the user device 512 determines at S908 that the firmware 508 has not been successfully updated if: (i) the wrong version identifier of the firmware 508 of the radio 502 is provided by the robot 202, 204 during rebooting of the radio 502 (i.e., a version identifier that does not match the version identifier of the updated radio firmware version); (ii) no version identifier of the firmware 508 of the radio 502 is provided by the robot 202, 204 during rebooting of the radio 502; or (iii) the radio 502 does not reboot.

If the user device 512 determines at S908 that the firmware 508 has been successfully updated to the updated radio firmware version, the method 900 proceeds to S910, at which the method 900 ends. On the other hand, if the user device 512 determines at S908 that the firmware 508 has not been successfully updated to the updated radio firmware version, the method 900 proceeds to S912, at which the user device 512 outputs a notification to the user 518 via the user interface 516.

If the updated radio firmware version has been successfully uploaded at S902 but the firmware 508 has not been successfully updated at S908, the robot 202, 204 is likely to be in a non-functioning state. In this state, the radio 502 of the robot 202, 204 does not function, meaning that the robot 202, 204 requires retrieval from the grid 100. The notification output at S912 may inform the user 518 that the robot 202, 204 is in a non-functioning state.

The user device 512 may then provide instructions to the user 518 via the user interface 516. Specifically, the user device 512 may instruct, at S914, the user 518 to retrieve the robot 202, 204 from the grid 100. The user device 512 may then instruct, at S916, the user 518 to carry out a manual update to the firmware 508 of the radio 502 (e.g., using a wired data connection from the robot 202, 204 to a separate computing device).

### Penultimate comments

It will be appreciated that the system 500 and methods 600, 700, 800, 900 may also be used to update other hardware components of a robot 202, 204 operating in an automated storage and retrieval system. In such alternative implementations, the methods 600, 700, 800, 900 may be adapted by replacing references to the radio 502 of the robot 202, 204 with references to the hardware component of the robot 202, 204 for which the firmware is being updated.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A computer-implemented method of updating radio firmware of a radio of a robotic container-handling vehicle in an automated storage and retrieval system, the method comprising:
determining whether a bootloader of the radio is capable of updating the radio firmware to an updated radio firmware version;
responsive to determining that the bootloader is not capable of updating the radio firmware to the updated radio firmware version, uploading bootloader update firmware to the robotic container-handling vehicle; and
responsive to determining that the bootloader has been updated with the bootloader update firmware, uploading the updated radio firmware version to the robotic container-handling vehicle.

2. The computer-implemented method of claim 1, further comprising receiving a command to update the firmware of the radio to the updated radio firmware version.

3. The computer-implemented method of claim 2, wherein responsive to determining that the bootloader is not capable of updating the radio firmware to the updated radio firmware version, the bootloader update firmware is uploaded to the robotic container-handling vehicle automatically after receipt of the command to update the firmware of the radio to the updated radio firmware version.

4. The computer-implemented method of claim 2 or claim 3, wherein responsive to determining that the bootloader has been updated with the bootloader update firmware, the updated radio firmware version is uploaded to the robotic container-handling vehicle automatically.

5. The computer-implemented method of any of claims 1 to 4, wherein determining whether the bootloader is capable of updating the radio firmware to the updated radio firmware version comprises identifying a version identifier of the updated radio firmware version.

6. The computer-implemented method of any of claims 1 to 5, wherein determining whether the bootloader is capable of updating the radio firmware to the updated radio firmware version comprises identifying a version identifier of the bootloader.

7. The computer-implemented method of claim 6, wherein identifying the version identifier of the bootloader comprises instructing the robotic container-handling vehicle to provide a response identifying the version identifier of the bootloader.

8. The computer-implemented method of claim 7, further comprising:
responsive to receiving no response from the robotic container-handling vehicle within a predetermined time period, determining that the bootloader is not capable of updating the radio firmware to the updated radio firmware version.

9. The computer-implemented method of any of claims 1 to 8, further comprising:
responsive to determining that the bootloader is not capable of updating the radio firmware to the updated radio firmware version, outputting a notification to a user interface, wherein the notification indicates that the bootloader requires updating.

10. The computer-implemented method of any of claims 1 to 9, further comprising:
responsive to determining that the upload of the bootloader update firmware to the robotic container-handling vehicle has failed, re-attempting to upload the bootloader update firmware to the robotic container-handling vehicle.

11. The computer-implemented method of any of claims 1 to 10, further comprising:
responsive to determining that the update of the bootloader with the bootloader update firmware has failed, instructing a user to retrieve the robotic container-handling vehicle from the automated storage and retrieval system.

12. The computer-implemented method of any of claims 1 to 11, further comprising:
responsive to determining that the update of the radio firmware with the updated radio firmware version has failed, instructing a user to retrieve the robotic container-handling vehicle from the automated storage and retrieval system.

13. The computer-implemented method of any of claims 1 to 12, further comprising:
responsive to determining that the upload of the updated radio firmware version to the robotic container-handling vehicle has failed, re-attempting to upload the updated radio firmware version to the robotic container-handling vehicle.

14. The computer-implemented method of any of claims 10 to 13, further comprising outputting a notification to a user interface, wherein the notification indicates that the update to the radio firmware has failed.

15. A computer-readable medium comprising instructions which, when executed by one or more processors of one or more computing devices, cause the one or more computing devices to carry out the method of any of claims 1 to 14.
